# EUROPEAN PATENT SPECIFICATION

(11) **EP 0 801 114 B1**
(45) Date of publication and mention of the grant of the patent: **01.12.1999**
(21) Application number: 97110893.1
(22) Date of filing: 09.05.1995
(51) Int. Cl.: C09B 62/503, D06P 3/24, C09B 67/24, C09B 67/22

(54) **Fiber-reactive copper formazane dyes**
Faserreaktive Kupfer-Formazanfarbstoffe
Colorants réactifs de type formazane de cuivre

(30) Priority: 24.05.1994 US 248292
(43) Date of publication of application: 15.10.1997
(62) Divisional of application: 95918436.7
(73) Proprietor: DyStar L.P., Charlotte, North Carolina 28273 (US)
(72) Inventor: Hemling, Walter, 65187 Eppstein (DE); Helle, Mark, Hope, RI 02831 (US); Proulx, Kerry, Conventry, Ri 02816 (US); McIntosh, Leslie, Davidson, North Carolina 28036 (US); DeCross, Philomen, Coventry, RI 02816 (US)
(74) Representative: Muley, Ralf, Dr.

(56) References cited:
- EP-A- 0 028 788
- DE-A- 2 945 493
- FR-A- 1 560 653
- FR-A- 2 360 643

## Description

The invention is on the technical field of fiber-reactive dyes suitable for dyeing and printing natural and synthetic polyamides.

Commercial dyeings are normally made using several component dye mixture in order to obtain the desired shade and color depth. These dye mixtures comprise dyes selected from the primary colors, i.e. a yellow, a blue and a red dye. The individual dyes must be suitable for combination dyeing in trichromatic systems, i.e. blends two or more dyes containing the primary colors mixed predetermined amounts to give the desired shade. Suitable dyes in admixture must also produce a uniform color build-up and simultaneously a uniform shade at different dye bath concentrations in order to produce a dye having an acceptable appearance. In addition, the dye composition must give a dyeing having acceptable fastness properties at an acceptable cost.

In commercial practice, polyamide fibers are dyed by the exhaust, continuous, and printing methods using acid dyes. An illustrative trichromatic, acid dye system is a mixture of a C.I. (Color Index) Acid Orange 156, C.I. Acid Blue 324, and C.I. Acid Red 266. Although these systems have gained acceptance in the dyeing of polyamides, they lack certain desired characteristics, e.g. on tone build-up, cold strike rate, ozone and nitrous oxide resistance, little or no phototropism and cold water solubility.

Various attempts have been made to use dyes containing the vinyl sulfone group to dye nylon. However, these dyes have not gained commercial acceptance in the dyeing of polyamide primarily due to their failure to give a uniform level dyeing with the above described properties. The vinyl sulfone dyes tend to selectively concentrate on one portion of the fiber leaving other portions deficient in that color either due variations in the fiber's morphology or the strike rate of the dye or a combination of both. This problem is particularly evident in the dyeing of polyamide materials where the fiber is highly extended, for example, in nylon carpets and rugs.

Various attempts have been tried to overcome disadvantages of the vinyl sulfone dyes in polyamide dyeing applications. U.S. Patent No. 4,762,524 is an example of the prior art. In this prior art patent, a reaction product of the vinyl sulfone dye and an N-alkyl-amino-alkyl sulfonic or carboxyclic acid is formed in an attempt to make the vinyl sulfone dye more suitable for polyamide dyeings. U.S. Patent No. 3,802,837 teaches to form a reaction product of N-methyl-taurine to adapt the vinyl sulfone dye to polyamide dyeing. Although the above identified prior art teaches improved dyeing characteristics, they have not been accepted in the commercial dyeing of polyamides.

Furthermore, copper formazane compounds (dyes) having a β-thiosulfatoethylsulfonyl group as a fiber-reactive moiety, are described in German Offenlegungsschrift No. 2,945,493, such as in Example 1 thereof, without any hint to be favorable for the use in a di- or trichromic dyeing process of polyamide in the presence of other dyes.

Also the French Patent Specification No. 1,560,653 describes copper formazane compounds having, as a fiber-reactive group, for example a β-sulfatoethylsulfonyl group; a favorable use in combination with other dyes in the polychromic dyeing procedures is not mentioned there and also not deducible.

According to the present invention novel copper formazane compounds (dyes) according to the general formula (A) 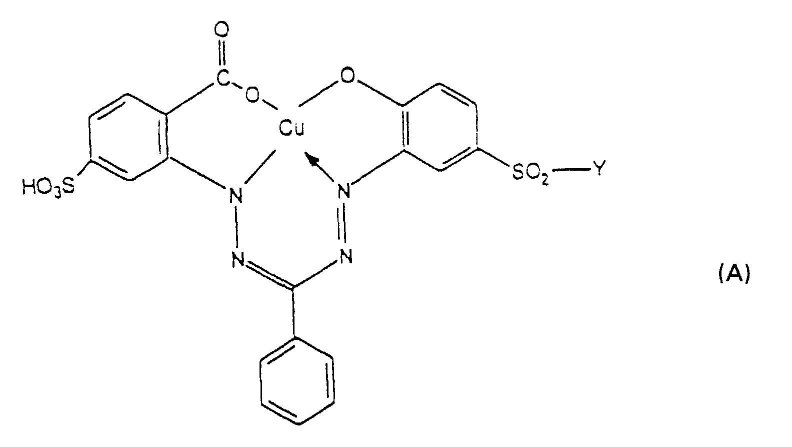 wherein Y is selected from vinyl, β-sulfatoethyl, β-thiosulfatoethyl, β-phosphatoethyl and β-chloroethyl, preferably thereof a compound (dye) of the formula (B) 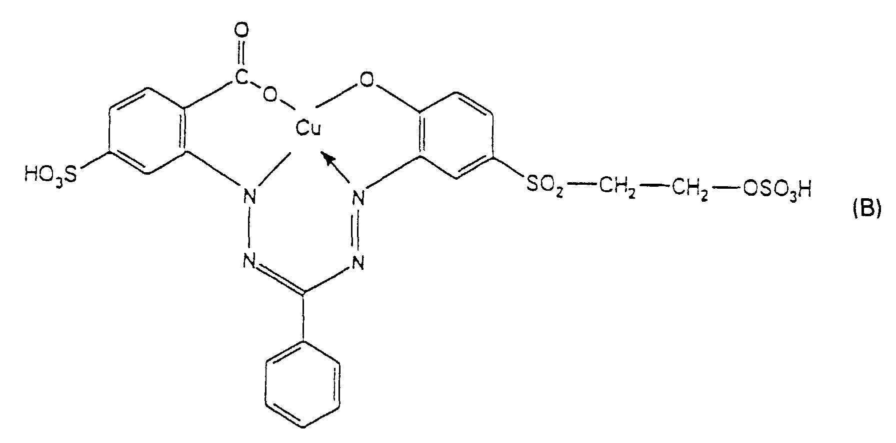 have been found which are suitable for use in compositions with yellow- and red-dyeing dyes specifically mentioned below in dichromatic and trichromatic dye compositions, preferably trichromatic dye compositions, to provide superior polyamide dyeing with excellent fastness, low phototropism, high ozone and nitrous resistance.

Those yellow- and red-dyeing dyes are: 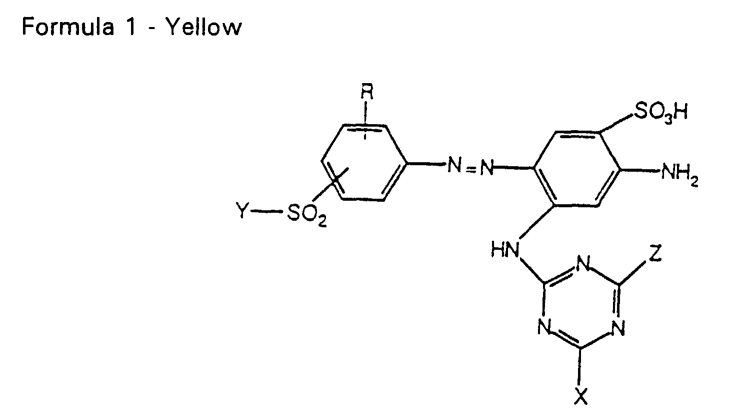 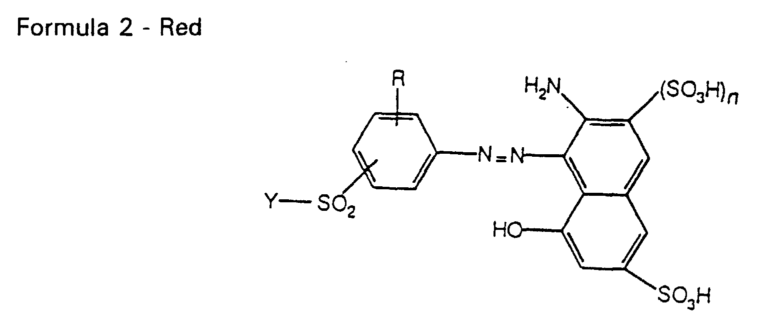 wherein R is Cl, OCH₃, CH₃, H or SO₃H; Y is vinyl, β-sulfatoethyl,
β-thiosulfatoethyl, β-phosphatoethyl or β-chloroethyl; X and Z are independently selected from -NHCN and Cl; and n is zero or 1. Preferably the substituent R is hydrogen or methoxy (OCH₃), Y is β-sulfatoethyl, X and Z are chlorine or cyanamide (NHCN) and n is zero.

Polyamides useful according to the invention include both the natural and synthetic polyamides. Examples of polyamides are silk, wool, nylon-6, nylon-6,6 and nylon 6/6,6 copolymers, nylon-11, nylon-12 and blends of such polyamides. The compounds of the invention are particularly useful in the dyeing of nylon-6 and nylon 6-6 carpeting. The polyamide substrates may be combined with fibers of other polymers, such as polyurethanes, polypropylene, polyethylene, polyester, rayon, etc. and in the form of fibers, yarns, fabrics or knitted goods, and especially in the form of carpets.

The dyes of the invention according to the formula (A) may be applied by conventional exhaust, continuous or printing methods well known in the art. The dyeing liquor or printing paste can contain typical dyeing auxiliaries, such as wetting agents, antifoaming agents, leveling agents, retarders, acids, buffers etc. and other agents affecting the properties of the textile material, for example softening agents, additives for imparting a flame retardant finish, dirt, water and oil repelling agents, as well as water-softening agents and natural or synthetic thickeners, for example alginates, cellulose ethers and the like.

The dyes of the invention may preferably be used in trichromatic dye compositions, such as those wherein a dye of the invention is combined with two dyes which are selected from dyes of the formulae Yellow 1, Yellow 2, Yellow 3, Red 1 and Red 2.

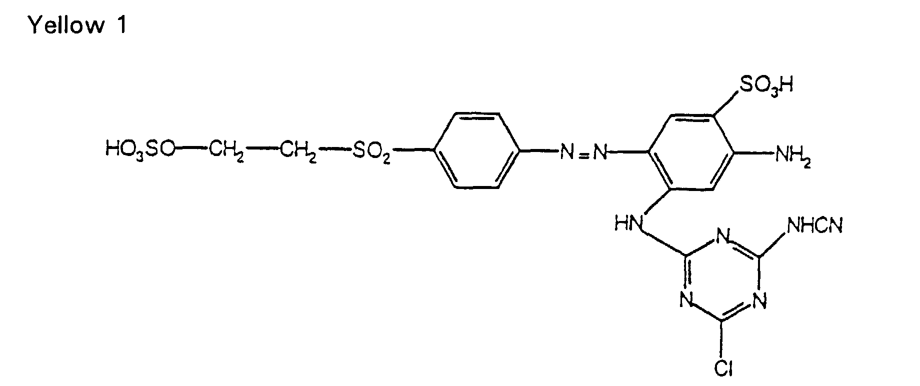

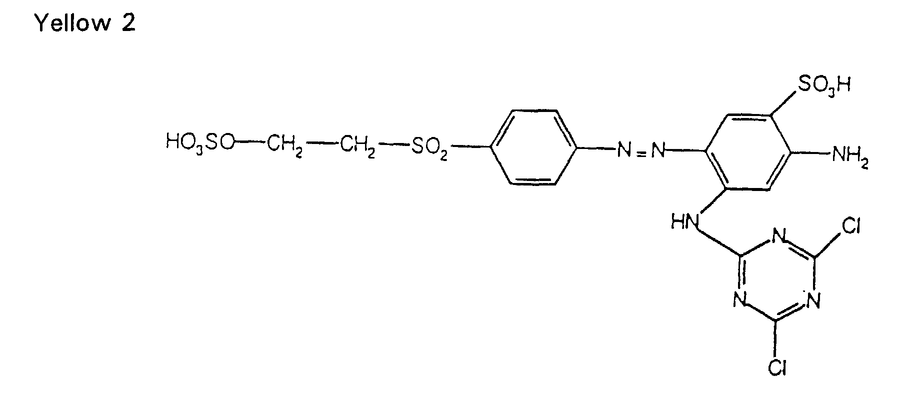

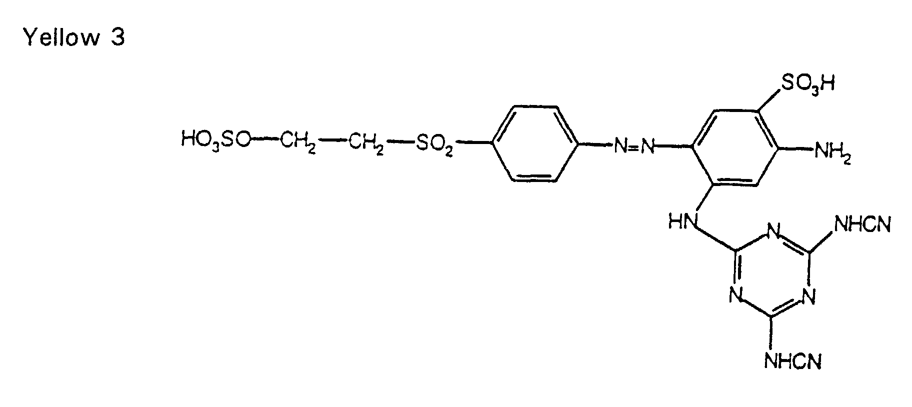

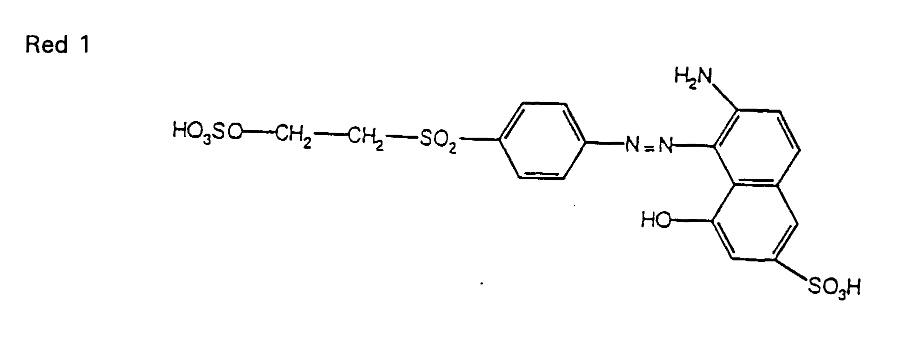

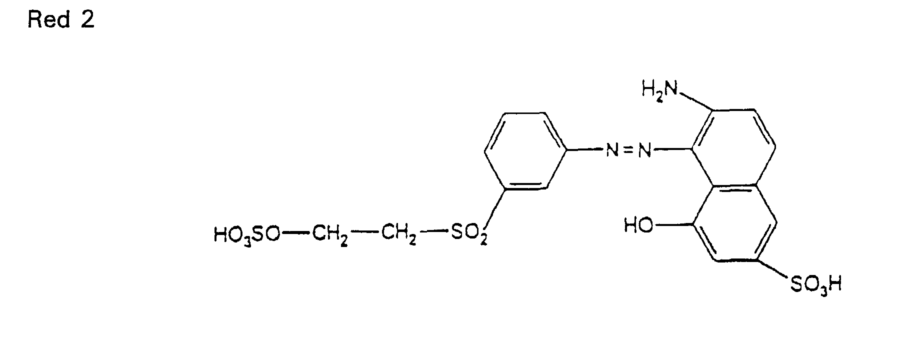

The dyes of the invention show surprisingly and unexpected an excellent compatibility with the other dyes mentioned, and the trichromatic dyeings or prints obtained, an excellent, uniform color build-up, by good strike and exhaustion properties and good constancy of shade at various concentrations and shades. The dyeings also show a very high level of fastness properties, in particular ozone and nitrous oxide fastness and very little phototropism, which is superior compared to the present used acid dyes. In addition, the cold water solubility of the individual dyes and also of the mixtures is excellent and even after several days, highly concentrated solutions do not show any dyestuff precipitation, which would affect the dyeing process.

The dyes of the invention may be used in free acid or salt form or preferably in their salt form. Suitable salts are for example the alkali metal, alkaline-earthmetal or ammonium salts, or the salts of an organic amine, e.g. the salts of sodium, lithium, potassium, ammonium and triethanolamine. They contain as a rule further additives, for example sodium chloride, sodium sulfate or dextrin which are used to adjust their tinctorial strength to a standard level.

The synthesis of the dyes of the general formula (A) can be done by following the procedures of the German Patent No. 1,719,083 by using the appropriate intermediates.

The following Examples illustrate the invention and are not intended to limit the scope of the claims of the invention. In the Examples, the following trade names and abbreviations are used:
(1) Hostapur® CX wetting agent (an alkyl polyglycol ether)
(2) Remol® AN leveling agent (a quaternary ammonium salt of C12 to C16 amine)
(3) DOSS-70 wetting agent (dioctylsulfosuccinate)
(4) DOW FAX® 2A1 (an anionic leveling agent)

Items (1) to (3) above are available from Hoechst Celanese Corporation, Somerville, New Jersey and Item (4) from Dow Chemical Company, Midland, Michigan.

Percentage listed in the Examples are weight percent based on the weight of fabric unless otherwise noted.

### Example A (Synthesis of the dye of formula (B)):

160 g of the hydrazone, which results by condensating 2-carboxyphenylhydrazine-5-sulfonic acid with benzaldehyde, is dissolved in 750 g of water and brought to pH of 6 to 7 using an aqueous sodium hydroxide solution. 127 g of copper sulfate is added to the resulting solution, and the pH is maintained at 5 to 6 by using soda ash.

To this solution, an aqueous diazo suspension is added, which can be made by diazotizing 149 g 2-amino-4-(β-sulfatoethylsulfonyl)-phenol with an aqueous solution of sodium nitrite and sulfuric acid. The coupling reaction is run at pH of 4 to 6 by maintaining the pH with soda ash. To finalize the reaction, the coupling mixture is heated up to 40 to 80°C at pH 2 to 6 for 5 hours. High performance liquid chromatography can be used in all steps to indicate the end of the reaction. The resulting dyestuff solution is clarified and spray dried. It results a blue dyestuff powder, which can be used to perform the stated trichromatic nylon dyeings. The dye has an absorption maximum at 600 nm.

This dye may be prepared by an alternate synthesis route. The reactant, 2-methoxy-5-(β-sulfatoethylsulfonyl) aniline may be used instead of 2-amino-4-(β-sulfatoethylsulfonyl) phenol and the resulting product demethylated by heating the reaction mixture at a pH of 3 to 7 at 60 to 90°C for 2 to 3 hours to obtain the desired dyestuff.

### Use Example 1:

A 20 g piece of nylon-6-carpet was dyed in an aqueous dye bath containing the following components:

| | |
|---|---|
| Dye Yellow 1 | 0.370 % |
| Dye Red 1 | 0.158% |
| Dye of formula (B) | 0.72 % |
| Remol ANL | 1.0 % |
| DOW FAX 2A1 | 0.5 % |
| 8 g Ammonium acetate | |

The dyeing was conducted at a liquor ratio of 20 : 1. The dye bath is adjusted to a pH of 4.5 at 26.7°C (80°F). The temperature of the bath is raised at a rate of 1.6°C (3°F) per minute to 82.3°C (180°F). The bath is held at 82.3°C (180°F) for 30 minutes and then dropped and the carpet was rinsed in cold water and dried.

The resulting dyeing was a deep navy shade, which shows excellent levelness, light, ozone, nitrous oxide, pesticide, shampoo and wet and dry crock fastness. The dyeing shows also a good chlorine fastness and almost no phototropism.

On tone build-up during the dyeing was measured by removing a small sample of the dyed carpet at predetermined times and the shade measures. All samples were the same shade, meaning that the individual dyes have a very close strike rate and represent an ideal trichromatic system.

### Use Examples 2 to 15:

Table 1 shows the amount of dyes used in the different combination dyeings. The dyeing procedure was substantially the same as Use Example 1 for all Examples.

**Table 1**

| Ex. | Dyestuff | % | Shade of dyeing |
|---|---|---|---|
| | Dye Yellow 1 | 0.76 | |
| 2 | Dye Red 1 | 0.78 | burgundy |
| | Dye of formula (B) | 0.32 | |
| | Dye Yellow 1 | 0.77 | |
| 3 | Dye Red 1 | 0.30 | chocolate |
| | Dye of formula (B) | 0.30 | |
| | Dye Yellow 1 | 0.469 | |
| 4 | Dye Red 1 | 0.076 | brown |
| | Dye of formula (B) | 0.142 | |
| | Dye Yellow 1 | 0.181 | |
| 5 | Dye Red 1 | 0.033 | taupe |
| | Dye of formula (B) | 0.078 | |
| | Dye Yellow 1 | 0.027 | |
| 6 | Dye Red 1 | 0.0092 | beige |
| | Dye of formula (B) | 0.0074 | |
| | Dye Yellow 1 | 0.26 | |
| 7 | Dye Red 1 | 0.023 | green |
| | Dye of formula (B) | 0.14 | |
| | Dye Yellow 1 | 0.2 | |
| 8 | Dye Red 1 | 0.05 | grey |
| | Dye of formula (B) | 0.164 | |
| | Dye Yellow 1 | 0.22 | |
| 9 | Dye Red 1 | 0.11 | rose |
| | Dye of formula (B) | 0.033 | |
| | Dye Yellow 2 | 0.51 | |
| 10 | Dye Red 1 | 0.074 | brown |
| | Dye of formula (B) | 0.142 | |
| | Dye Yellow 2 | 0.78 | |
| 11 | Dye Red 1 | 0.76 | burgundy |
| | Dye of formula (B) | 0.32 | |
| | Dye Yellow 1 | 0.75 | |
| 12 | Dye Red 2 | 0.82 | burgundy |
| | Dye of formula (B) | 0.32 | |
| | Dye Yellow 1 | 0.77 | |
| 13 | Dye Red 2 | 0.35 | chocolate |
| | Dye of formula (B) | 0.30 | |
| | Dye Yellow 1 | 0.47 | |
| 14 | Dye Red 2 | 0.08 | brown |
| | Dye of formula (B) | 0.142 | |
| | Dye Yellow 1 | 0.18 | |
| 15 | Dye Red 2 | 0.11 | rose |
| | Dye of formula (B) | 0.033 | |

All dyeings were very level and uniform and are showing excellent light, ozone, nitrous oxide, pesticide, shampoo and wet and dry crock fastness. In addition, all dyeings are showing an excellent on tone build up, which was tested in the same manner as described in Example # 1.

### Use Example 16:

A 20 g piece of nylon-6,6 carpet was dyed by the continuous method using an aqueous dyeing liquor containing:

| | |
|---|---|
| Dye Yellow 1 | 0.17 g/l |
| Dye Red 1 | 0.4 g/l |
| Dye of formula (B) | 0.05 g/l |
| Hostapur CX | 1.5 g/l |
| DOSS-70 | 0.5 g/l |
| DOW FAX 2A1 | 0.5 g/l |

The pH of the dyeing liquor was adjusted to 4.0 with acetic acid and the equipment set for a pick up was set at 300 to 400 % with steaming time of 10 minutes. The resulting dyeing was tan and the carpet had excellent levelness, light, ozone, nitrous oxide, pesticide, shampoo and wet and dry crock fastness. The dyeing also had a good chlorine fastness and almost no phototropism.

### Examples 17 to 23:

Table 2 shows the amount of dyes used in the following combination dyeings. The used dyeing procedure was substantially the same as Use Example 16.

**Table 2**

| Ex. | Dyestuff | g/l | Shade of dyeing |
|---|---|---|---|
| | Dye Yellow 1 | 0.543 | |
| 17 | Dye Red 1 | 0.099 | taupe |
| | Dye of formula (B) | 0.234 | |
| | Dye Yellow 1 | 0.78 | |
| 18 | Dye Red 1 | 0.069 | green |
| | Dye of formula (B) | 0.42 | |
| | Dye Yellow 1 | 0.6 | |
| 19 | Dye Red 1 | 0.15 | grey |
| | Dye of formula (B) | 0.492 | |
| | Dye Yellow 1 | 0.66 | |
| 20 | Dye Red 1 | 0.33 | rose |
| | Dye of formula (B) | 0.099 | |
| | Dye Yellow 1 | 0.543 | |
| 21 | Dye Red 2 | 0.085 | taupe |
| | Dye of formula (B) | 0.234 | |
| | Dye Yellow 1 | 0.081 | |
| 22 | Dye Red 2 | 0.025 | beige |
| | Dye of formula (B) | 0.0222 | |
| | Dye Yellow 1 | 0.17 | |
| 23 | Dye Red 2 | 0.035 | tan |
| | Dye of formula (B) | 0.05 | |

All dyeings were very level and uniform and are showing excellent light, ozone, nitrous oxide, pesticide, shampoo and wet and dry crock fastness.

## Claims

1. A compound of the formula (A) 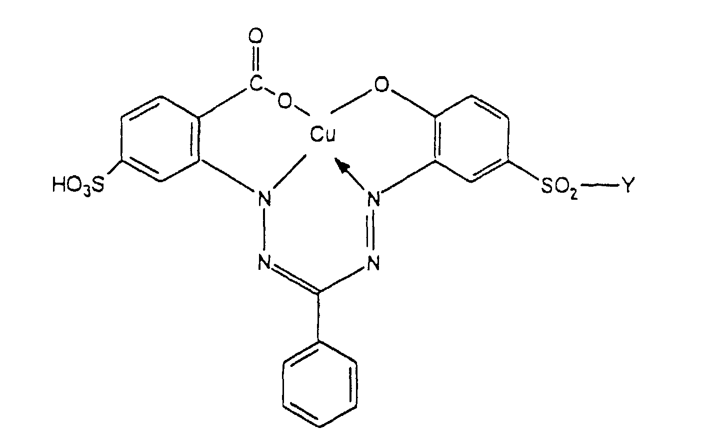 wherein Y is vinyl, β-sulfatoethyl, β-thiosulfatoethyl, β-phosphatoethyl or β-chloroethyl.

2. A compound of the formula (B)

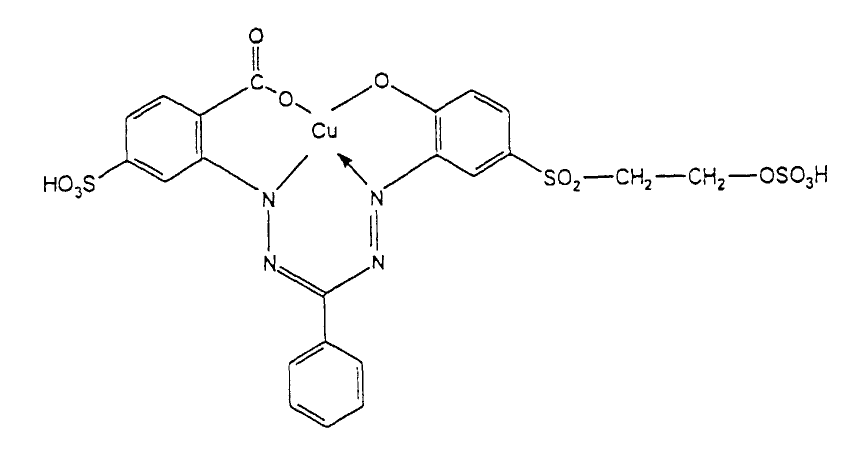

## Patentansprüche

1. Verbindung der Formel (A) 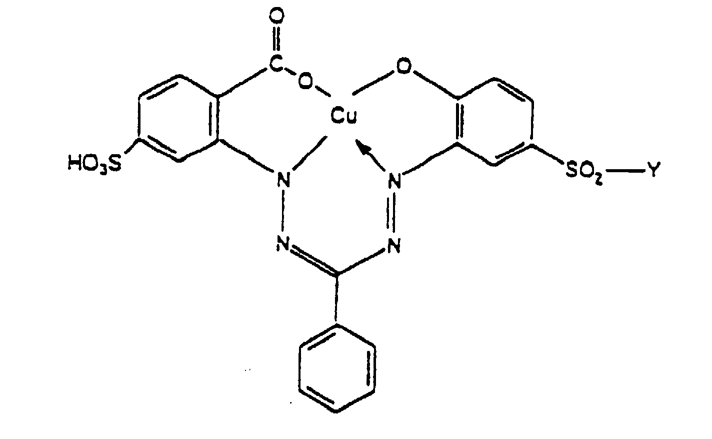 in der Y für Vinyl, β-Sulfatoethyl, β-Thiosulfatoethyl, β-Phosphatoethyl oder β-Chlorethyl steht.

2. Verbindung der Formel (B)

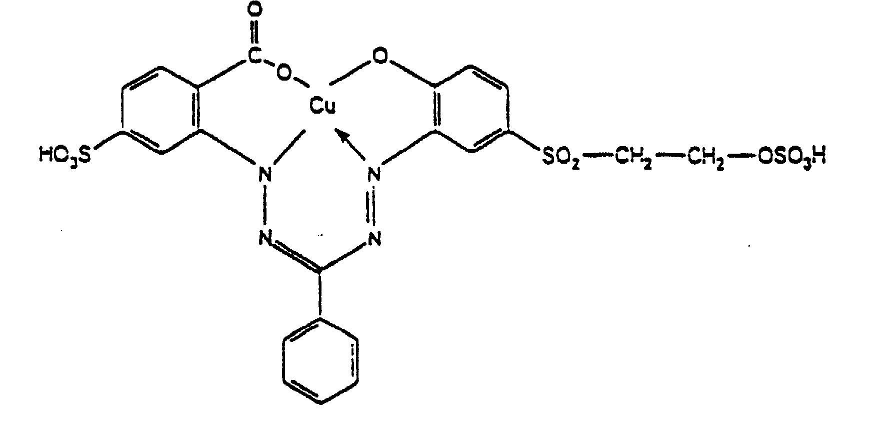

## Revendications

1. Composé de formule (A) 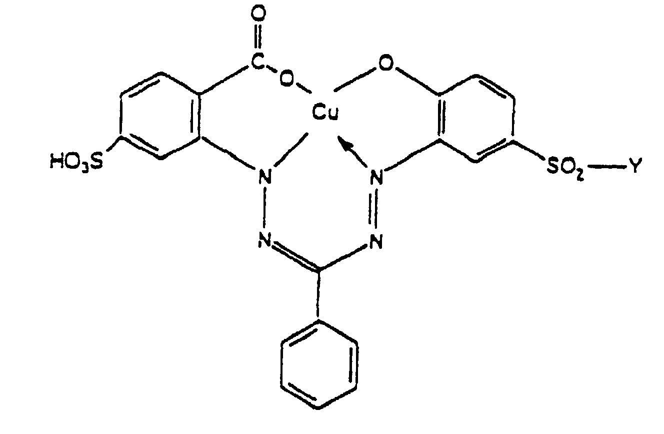 dans laquelle Y est un vinyle, un β-sulfatoéthyle, un β-thiosulfatoéthyle, un β-phosphatoéthyle ou un β-chloroéthyle.

2. Composé de formule (B)
